# EUROPEAN PATENT SPECIFICATION

(11) **EP 3 957 889 B1**
(45) Date of publication and mention of the grant of the patent: **31.07.2024**
(21) Application number: 21189743.4
(22) Date of filing: 04.08.2021
(51) Int. Cl.: F16K 31/06, F15B 13/04

(54) **SOLENOID VALVE**
MAGNETVENTIL
ÉLECTROVANNE

(30) Priority: 12.08.2020 DE 102020121219
(43) Date of publication of application: 23.02.2022
(73) Proprietor: FTE automotive GmbH, 96106 Ebern (DE)
(72) Inventor: LEHNERT, Alexander, D-96106 EBERN (DE); WÜCHNER, Benjamin, D-96106 EBERN (DE); GEGNER, Patrick, D-96106 EBERN (DE); SAUERTEIG, Frank, D-96106 EBERN (DE); SPERBER, Christian, D-96106 EBERN (DE)
(74) Representative: Valeo Powertrain Systems

(56) References cited:
- DE-A1- 102004 030 976
- JP-A- S5 828 079
- US-A1- 2018 195 477

## Description

The invention relates to a solenoid valve comprising a damping device.

Solenoid valves can be used to open or close a flow cross section. In one application, they are used in a pump assembly to control a hydraulic pressure generated by a hydraulic pump in order to actuate an actuator in the powertrain of a motor vehicle, which actuator for example is associated with a clutch or a gearbox. By means of the actuator, the clutch can be switched between an open and a closed position or held in an intermediate state (so-called slipping). The slipping allows the vehicle to pull away without jolting or enables a jolt-free gear shifting operation. In the case of a gearbox actuator, a specific gear stage may be engaged.

The solenoid valve may be exposed here to vibrations, which occur in particular at high pressures in the hydraulic system. The vibrations may originate from external excitation or from pulsations in the hydraulic system and they cause the armature of the solenoid valve to vibrate. This reduces the accuracy with which the solenoid valve is able to control the hydraulic pressure. In addition, disturbing noises may arise in the system. Furthermore, vibrations when pulling away or when shifting gear are perceived by the occupants of a motor vehicle and are considered to be irritating. A conventional solenoid valve according to the preamble of claim 1 is known from JPS5828079A.

An object of the present invention is therefore to reduce or completely prevent vibrations of the armature of the solenoid valve.

This object is achieved in accordance with the invention by a solenoid valve according to claim 1 which is comprising an armature which is displaceable between an open position and a closed position and which is designed to apply a closing force to a valve element which in a closed state of the solenoid valve cooperates with a valve seat, and comprising a damping device which is designed to damp a movement of the armature, wherein the damping device comprises at least one damping chamber and a throttle element, wherein the throttle element is designed to generate a resistance and thus to damp the movement of the armature.

Since the movement of the armature is damped purposefully by means of the damping device, it is possible to prevent the armature from starting to vibrate. Disturbing noises and pressure fluctuations are thus avoided. In particular, harmonic vibrations of the armature which are excited by a pulsation of the pump are avoided.

The damping chamber is preferably filled with fluid, and the throttle element is designed to generate a flow resistance when a fluid flows through it. When the armature moves, fluid is displaced from the damping chamber or is sucked into the damping chamber, and in each case the fluid flows through the throttle element.

In particular, the damping chamber is always filled fully with fluid during operation. A particularly good damping effect is thus generated.

According to one embodiment, the solenoid valve is arranged in a fluid reservoir, in particular in an oil tank, in such a way that the solenoid valve is completely flooded.

The resistance generated by the throttle element ensures that the movement of the armature is damped. The damping of the armature is based in particular on the fact that the armature can only move as quickly as a fluid is displaced from the damping chamber.

The armature does not have to be in direct contact with the valve element in order to apply a closing force to it, and instead further elements may be arranged between the armature and the valve element, which elements are able to transfer a closing force from the armature to the valve element.

In accordance with one embodiment, the throttle element is designed to generate a greater resistance in the event of a movement of the armature in one direction, in particular in the direction of the closed position, than in the event of a movement of the armature in the opposite direction. In this way, an improved response time is achieved as compared to when damping of equal magnitude is provided in both directions. It is also conceivable that the throttle element is designed to generate a resistance only when the armature moves in one direction, in particular in the direction of the closed position, whilst a smaller resistance is generated when the armature moves in the opposite direction. The direction in which no damping or only minor damping occurs may be the direction essential for the function of the solenoid valve, that is to say the direction in which a particularly short response time is desired.

According to the invention, the throttle element comprises two plate-like aperture elements, each having at least one flow-through opening, which are arranged adjacently to the damping chamber in such a way that fluid, as it flows into the damping chamber and as it flows out from the damping chamber, flows through the aperture elements, more specifically the flow-through openings. The flow-through openings form, in particular, inlet and outlet openings to and from the damping chamber. In this way, the aperture elements delimit a flow cross section, whereby a flow resistance is in turn generated. The flow resistance ensures the damping of the armature.

The at least one flow-through opening of the one aperture element is preferably larger than the at least one flow-through opening of the other aperture element, with the flow-through openings being arranged in an overlapping fashion, in particular concentrically. The differently sized openings are used to generate a different flow resistance depending on the direction in which the fluid flows. In this way, greater damping is achieved when the armature moves in one direction than when the armature moves in the opposite direction.

The aperture elements may bear directly against one another. The damping device is thus particularly compact.

In accordance with the invention, one of the aperture elements comprises at least one movably mounted tongue, with the at least one flow-through opening of the aperture element being arranged within the movable tongue. Depending on the position of the tongue, the flow-through opening in the other aperture element without tongue can thus be covered partially or not at all. Since the tongue is movable, the advantage is achieved that the flow resistance can be varied depending on the direction in which the fluid flows through the throttle element.

The flow-through opening which is arranged within the movable tongue is in particular smaller than the flow-through opening in the aperture element without tongue. When the tongue bears against the aperture element, the flow-through opening is thus covered in part by the tongue. The flow cross section of the throttle element is defined in this state by the smaller opening within the tongue.

The solenoid valve may comprise an intermediate plate which is arranged between the armature and the valve seat, with at least one indentation being provided in the intermediate plate, into which indentation the at least tongue can move. A tolerance for the movement of the tongue is thus created by the indentations. At the same time, the indentation can delimit a movement of the tongue as a result of the tongue striking against the bottom of the indentation in a deflected position.

The indentation is larger than the tongue of the one aperture element, as considered for example in a plan view. When the tongue is deflected, fluid can thus flow both through the flow-through opening in the tongue and past the tongue. The flow resistance generated by the throttle element is thus reduced when the tongue is deflected.

The at least one indentation is preferably part of the damping chamber, with the indentation forming a widening of the damping chamber.

In accordance with one embodiment, the aperture elements are formed as stamped parts. This allows simple and economical production of the aperture elements and/or the throttle element. However, it is also conceivable that the aperture elements are injection-moulded parts or are produced as a laser-cut part or wire-eroded part.

The thickness of the aperture elements is preferably selected in such a way that the at least one tongue of the one aperture element is moved by means of the fluid pressure as fluid flows through the aperture element. In particular, the aperture element is flexible at least in the region of the mounting point of the tongue.

One of the two aperture elements has, for example, a thickness of at least 0.1 mm, whereas the further aperture element has a thickness of from 0.025 mm to 0.1 mm. In this way, the thinner aperture element can be supported on the thicker aperture element.

Instead of the plate-like aperture elements, it is also conceivable to provide a check valve having a slider and a ball. The plate-like aperture elements, however, have the advantage that they have a very short overall height and occupy only a small volume.

The aperture elements preferably have a constant thickness. It is thus possible to manufacture the aperture elements as stamped parts.

When manufacturing the aperture elements by means of injection moulding, it is conceivable to produce the aperture elements with a variable thickness. For example, the material thickness in the region of the mounting point of the tongue may be reduced in order to allow improved pivotability of the tongue.

The throttle element may have an anti-twist means. The anti-twist means may be designed to define both the position of the throttle element in the solenoid valve and also the position of the aperture elements relative to one another. In this way, it is ensured that the flow-through openings are positioned in a correct position, in particular that the flow-through openings are arranged in an overlapping fashion or concentrically with one another.

Further advantages and features of the invention will emerge from the following description and from the appended drawings, to which reference is made. In the drawings:
- Figure 1 shows a solenoid valve according to the invention in an exploded illustration,
- Figure 2 shows the solenoid valve from Figure 1 in a side view,
- Figure 3 shows the solenoid valve from Figures 1 and 2 in a front view,
- Figure 4 shows a section through the solenoid valve along line A-A in Figure 2,
- Figure 5 shows a detailed view from Figure 4,
- Figure 6 shows a section through the solenoid valve along line C-C in Figure 4,
- Figure 7 shows a detailed view from Figure 6,
- Figure 8 shows a perspective sectional illustration of the solenoid valve,
- Figure 9 shows a further perspective sectional illustration of the solenoid valve, and
- Figure 10 shows a further perspective sectional illustration of the solenoid valve.

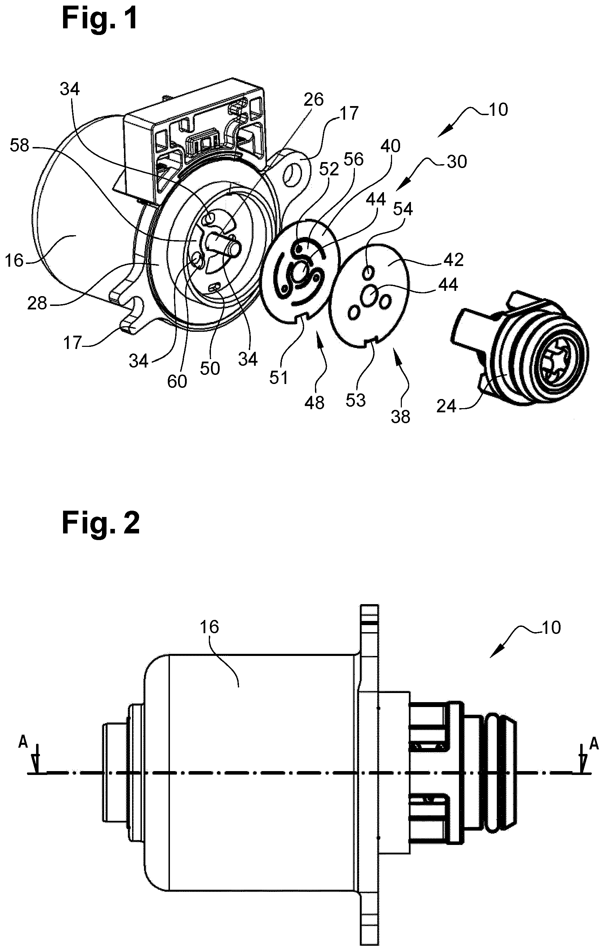

Figures 1 to 3 show a solenoid valve 10 in various views, with Figure 1 showing an exploded illustration. The shown solenoid valve 10 is a normally open valve. The solenoid valve 10 is a proportional valve.

The solenoid valve 10 is used for example to control a hydraulic pressure for actuation of an actuator in the powertrain of a motor vehicle. To this end, the solenoid valve 10 is associated with a branch of a hydraulic line that is fed from a pressure output of a hydraulic pump and leads to the actuator. The delivery flow of the hydraulic pump in the hydraulic line is backed up depending on the position of the solenoid valve 10. If the solenoid valve 10 is closed, the delivery pressure of the hydraulic pump is applied to the actuator. If the solenoid valve 10 is fully open, the delivery flow of the hydraulic pump flows back into a storage container via the branch, so that pressure is not applied to the actuator.

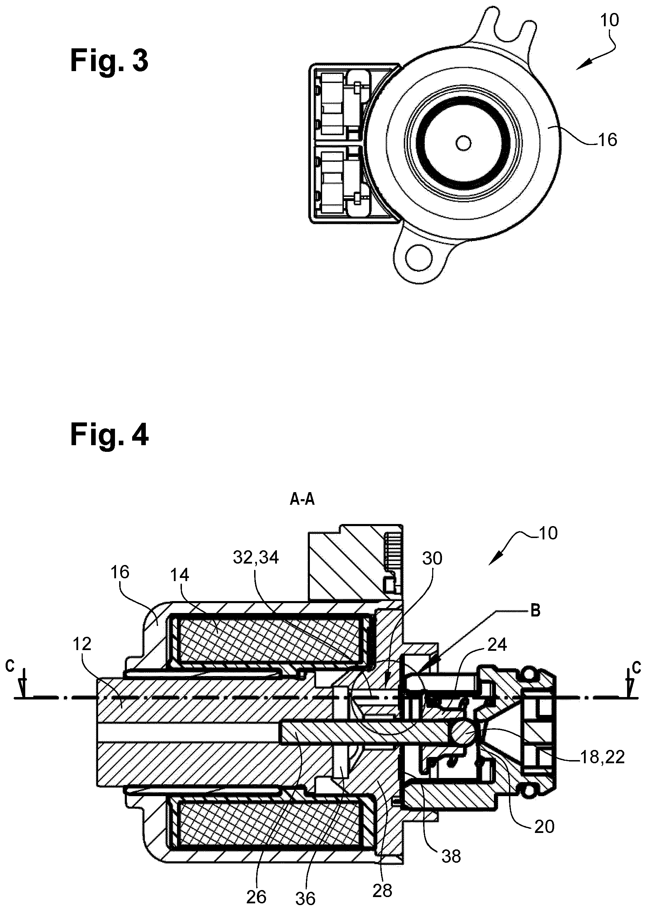

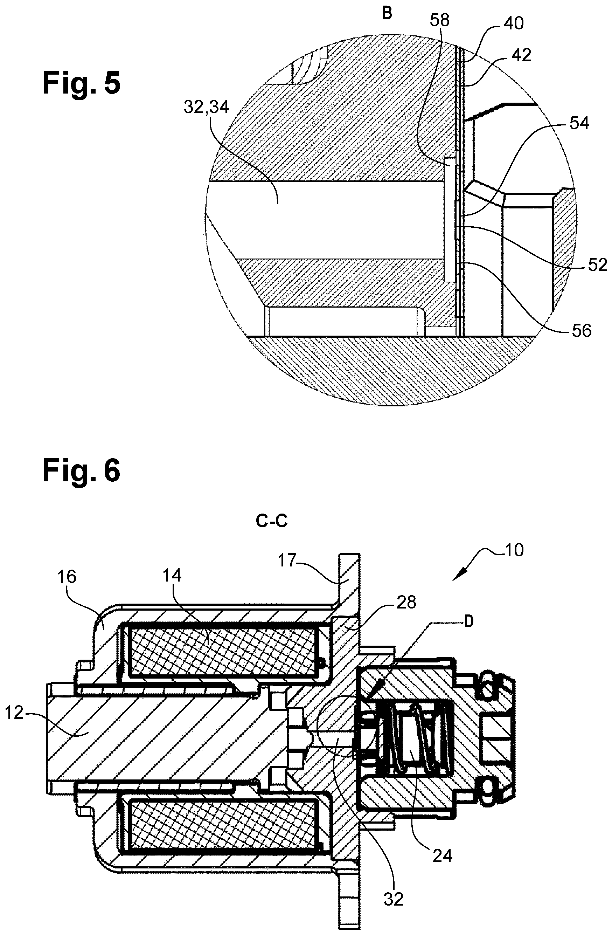

To actuate the solenoid valve 10, said valve comprises an armature 12, which is movable between an open position and a closed position, and a coil 14 surrounding the armature 12. The armature 12 and the coil 14 are accommodated in a housing 16 and are hidden from view in Figures 1 to 3. The armature 12 and the coil 14 can be seen, however, in the sectional illustrations in Figures 4 and 6, in which the armature 12 is shown in its open position.

Screw lugs 17 are integrally moulded on the housing 16.

In the sectional illustration in Figure 4, it can also be seen that the solenoid valve 10 comprises a valve element 18, which, in a closed state of the solenoid valve 10, cooperates with a valve seat 20.

The armature 12 is designed to press the valve element 18 with a closing force against the valve seat 20.

In the shown exemplary embodiment, the valve element 18 is a ball 22 that is guided in a guide element 24. The guide element 24 is connected to the armature 12 via a tappet 26. When the armature 12 is moved into the closed position, the valve element 18 is acted on by a closing force via the tappet 26.

An intermediate plate 28 is mounted between the armature 12 and the valve element 18 and is used, inter alia, as a guide for the tappet 26. More specifically, the intermediate plate 28 has an opening, through which the tappet 26 extends. The intermediate plate 28 additionally forms a cover for the housing 16.

The intermediate plate 28 is, for example, a steel part. Alternatively, the intermediate plate 28 may be a sintered part or a powder-injection-moulded part.

The solenoid valve 10 additionally has a damping device 30, which is designed to damp a movement of the armature 12. Vibrations of the armature 12 and thus also of the valve element 18 are reduced by the damping.

More specifically, the damping device 30 is designed to damp the movement of the armature 12 merely in one direction of movement, whereas the armature 12 can move relatively unbraked in the opposite direction. In the shown exemplary embodiment, the movement of the armature 12 is braked in the direction of the closed position, whereas the armature 12 can move relatively unbraked in the direction of the open position. Alternatively, the movement of the armature 12 in the direction of the open position or in both directions may be braked to varying extents.

The damping device 30 for this purpose comprises at least one damping chamber 32 (see Figure 4) which is filled with a fluid during operation of the solenoid valve 10.

When the armature 12 moves, either fluid is displaced from the damping chamber 32 or fluid is sucked into the damping chamber 32.

The damping chamber 32 is formed by at least one continuous recess 34 in the intermediate plate 28, which recess opens out into a receiving space 36, in which the armature 12 is accommodated.

The damping device 30 additionally has a throttle element 38, which is designed to generate a resistance and thus to damp the movement of the armature 12.

The resistance is generated in particular in that the throttle element 38 generates an increased flow resistance when fluid flows out from the damping chamber 32.

The throttle element 38 is particularly clearly visible in Figure 1.

Figure 1 also shows that the intermediate plate 28 has three recesses 34, which each form a damping chamber 32.

The throttle element 38 comprises a first plate-like aperture element 40 and a second plate-like aperture element 42. The aperture elements 40, 42 bear directly against one another, as can be seen in Figure 5, which shows a detailed view in the region of the damping chamber 32. In addition, the first aperture element 40 bears against the intermediate plate 28.

The aperture elements 40, 42 are manufactured, for example, as stamped parts, in particular as fine blanked parts. Alternatively, the aperture elements 40, 42 may be produced as a laser-cut part or as a wire-eroded part.

The first aperture element 40, for example, has a thickness of from 0.025 mm to 0.1 mm. The second aperture element 42, for example, has a thickness of at least 0.1 mm. The second aperture element 42 thus has a greater thickness and can support the first aperture element 42 without deforming.

The aperture elements 40, 42 may be manufactured from sheet metal, a plastics film or a plastics plate.

In the shown exemplary embodiment, the aperture elements 40, 42 are circular. Other shapes, however, are also conceivable.

Both aperture elements 40, 42 have a central cut-out 44. In the assembled state, the tappet 26 protrudes through the cut-outs 44 in order to position the aperture elements 40, 42 in the solenoid valve 10.

An anti-twist means 48 is also provided. The anti-twist means 48 is formed by an indentation 50 in the intermediate plate 28, a cut-out 51 in the aperture element 40, and a tab 53 on the aperture element 42, which tab is bent over through 90° towards the intermediate plate 28.

In the assembled state, the tab 53 protrudes through the cut-out 51 into the indentation 50 and thus prevents a rotation of the aperture elements 40, 42.

Alternatively, the anti-twist means 48 may also be formed as a result of the fact that the aperture elements 40, 42 have a non-round shape, for example an oval or a polygonal shape, and the intermediate plate 28 has a correspondingly shaped receptacle.

Further alternatively, a lug may be provided on the intermediate plate 28, which lug protrudes into the aperture elements 40, 42 through corresponding cut-outs and thus prevents the aperture elements 40, 42 from rotating. For the sake of simplicity, this embodiment has not been shown.

Generally, for the anti-twist means, a solution must be selected that can be produced in the simplest and most economical manner possible depending on the selected manufacturing method of the individual parts, in particular of the aperture elements 40, 42 and the intermediate plate 28.

Both the first aperture element 40 and the second aperture element 42 each have at least one, and in the shown exemplary embodiment three, flow-through openings 52, 54. In this case, the flow-through openings 52 of the first aperture element 40 are smaller than the flow-through openings 54 of the second aperture element 42. For example, the flow-through openings 52 of the first aperture element 40 have a diameter of 1 mm and the flow-through openings 54 of the second aperture element 42 have a diameter of from 3 mm to 4 mm.

The flow-through openings 52, 54 are round, but may also be shaped differently.

In addition, the flow-through openings 52 of the first aperture element 40 are arranged in overlapping fashion with the flow-through openings 54 of the second aperture element 42, in particular concentrically therewith.

The first aperture element 40 additionally has three movably mounted tongues 56. The flow-through openings 52 of the first aperture element 40 are arranged within the tongues 56.

Indentations 58 are formed in the intermediate plate 28, and the tongues 56 can move into said indentations. In this case, the indentations 58 are larger than the tongues 56, as considered in plan view. This can be seen in Figure 5. The indentations 58 each serve as a stop for the tongues 56.

The indentations 58 are part of the damping chambers 32.

As can be seen in Figure 1, in each case one further in particular oval-shaped indentation 60 is arranged directly adjacently to the indentations 58, which serve as stops for the tongues 56. More specifically, the indentations 60 are each adjacent to the recesses 34 which extend through the intermediate plate 28.

The indentations 60 have a greater depth than the indentations 58.

When a tongue 56 is deflected, in particular when the armature 12 is moved in the direction of the open position, a fluid can flow through the indentation 60 and past the tongue 56, thus reducing a flow resistance.

The indentations 58, 60, in the shown exemplary embodiment, have a shallow depth of a few millimetres. It is also conceivable, however, to form the indentations 58, 60 as a continuous axial groove. The damping chamber 32 would then be formed fully by the indentations 58, 60. The stop for the tongues 56 by the indentations 58 would not be provided in this case. The tongues 56 could bear against the base of the axial groove depending on pressure behaviour or deflection.

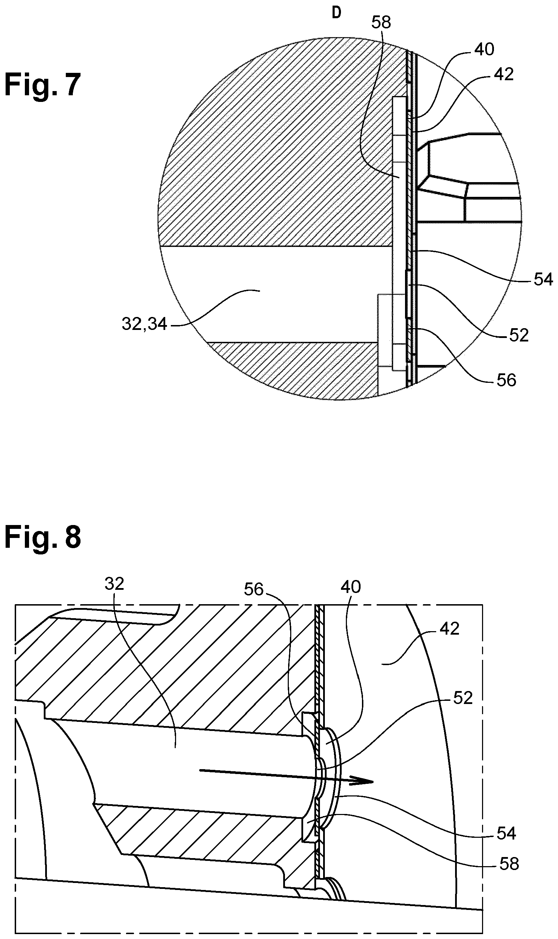

Figure 6 shows, in addition, a further section through the solenoid valve 10. Figure 7 shows a detailed view from Figure 6 in the region of the damping chamber 32.

Figure 8 shows a perspective sectional view of the solenoid valve 10 in the region of the damping chamber 32.

In addition, a fluid flow that occurs when the armature 12 is moved in the direction of the closed position is shown on the basis of an arrow.

When the armature 12 moves in the direction of the closed position, fluid is displaced from the damping chamber 32 and flows through the flow-through openings 52, 54 of the first and the second aperture element 40, 42.

As can be seen in Figure 8, the tongue 56 bears against the second aperture element 42 in this state, so that the flow-through opening 54 of the second aperture element 42 is partly covered or closed. The fluid displaced from the damping chamber 32 has to flow fully through the flow-through opening 52, which is the smaller of the flow-through openings 52, 54. Due to the small cross section of the flow-through opening 52, a high flow resistance results when the fluid is displaced from the damping chamber 32, thus damping the movement of the armature 12.

The cross section of the flow-through opening 52 may be selected according to a desired damping, wherein the damping is greater the smaller the cross section of the flow-through opening 52.

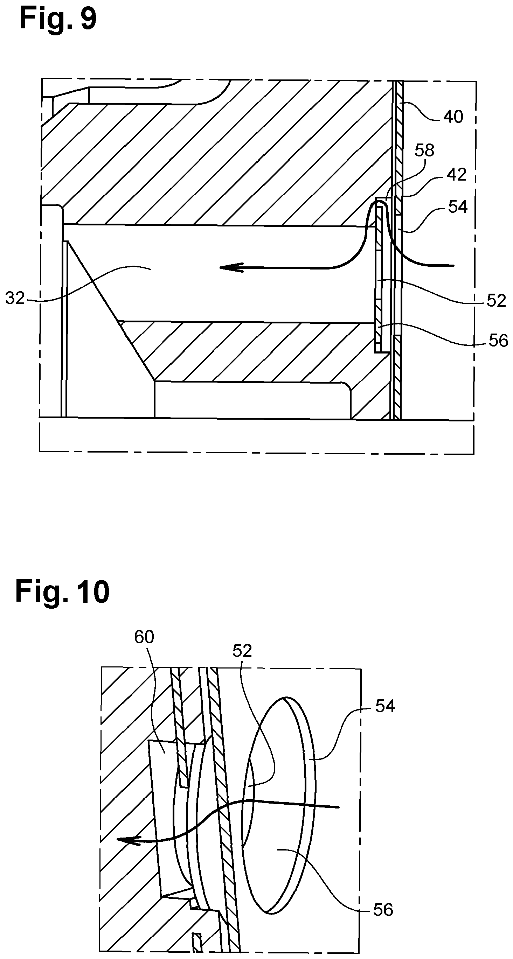

Figures 9 and 10 each show a further perspective sectional illustration in the region of the damping chamber 32. Figures 9 and 10, on the basis of an arrow, show a fluid flow that occurs when the armature 12 moves in the direction of the open position.

If fluid flows into the damping chamber 32, the tongue 56 is raised slightly by the fluid pressure. The fluid flowing into the damping chamber 32 is therefore able to flow into the damping chamber 32 not only through the flow-through opening 52, but additionally past the tongue 56, in particular through the indentation 60, as is shown in Figures 9 and 10. In addition, the flow-through opening 54 of the second aperture element 42 is no longer covered by the tongue 56. The armature 12 can thus be moved practically unbraked into the open position.

The flow resistance is consequently lower when the armature 12 moves into the open position than when the armature 12 moves into the closed position. The armature 12 is thus particularly well damped when the solenoid valve 10 closes, whereas a particularly short response time is achieved when the solenoid valve 10 opens.

In order to achieve damping when the armature 12 moves in the opposite direction, in particular in the direction of the open position, the positions of the aperture elements 40, 42 may be swapped as compared with the shown exemplary embodiment, such that the tongues 56 can be deflected in a direction away from the damping chamber 32. The second aperture element 42 is in this case arranged between the damping chamber 32 and the first aperture element 40.

In a further alternative embodiment, which is not shown for the sake of simplicity, the damping device 30 may be arranged at a different position in the solenoid valve 10, for example on the rear side, where the armature 12 exits from the housing 16. Further alternatively, it is conceivable that the damping device may be arranged laterally on the solenoid valve 10 by a corresponding arrangement of fluid channels.

## Claims

1. Solenoid valve (10) comprising an armature (12) which is displaceable between an open position and a closed position and which is designed to apply a closing force to a valve element (18) which in a closed state of the solenoid valve (10) cooperates with a valve seat (20), and comprising a damping device (30) which is designed to damp a movement of the armature (12), wherein the damping device (30) comprises at least one damping chamber (32) and a throttle element (38), wherein the throttle element (38) is designed to generate a resistance and thus to damp the movement of the armature (12), wherein the throttle element (38) comprises two plate-like aperture elements (40, 42), each having at least one flow-through opening (52, 54), which are arranged adjacently to the damping chamber (32) in such a way that fluid, as it flows into the damping chamber (32) and as it flows out from the damping chamber (32), flows through the aperture elements (40, 42) **characterized in that** one of the aperture elements (40, 42) comprises at least one movably mounted tongue (56), the at least one flow-through opening (52, 54) of the aperture element (40, 42) being arranged within the movable tongue (56).

2. Solenoid valve (10) according to claim 1, **characterized in that** the throttle element (38) is designed to generate a greater resistance in the event of a movement of the armature (12) in one direction, in particular in the direction of the closed position, than in the event of a movement of the armature (12) in the opposite direction.

3. Solenoid valve (10) according to claim 1 or 2, **characterized in that** the at least one flow-through opening (54) of one aperture element (42) is larger than the at least one flow-through opening (52) of the other aperture element (40), the flow-through openings (52, 54) being arranged in an overlapping fashion, in particular concentrically.

4. Solenoid valve (10) according to one of the preceding claims, **characterized in that** the aperture elements (40, 42) bear directly against one another.

5. Solenoid valve (10) according to one of the preceding claims, **characterized in that** the solenoid valve comprises an intermediate plate (28) which is arranged between the armature (12) and the valve seat (20), wherein at least one indentation (58) is provided in the intermediate plate (28), into which indentation at least one tongue (56) can move.

6. Solenoid valve (10) according to claim 5, **characterized in that** the indentation (58) is larger than the tongue (56) of the one aperture element (40, 42) as considered in plan view.

7. Solenoid valve (10) according to one of the preceding claims, **characterized in that** the aperture elements (40, 42) are formed as stamped parts.

8. Solenoid valve (10) according to one of the preceding claims, **characterized in that** the thickness of the aperture elements (40, 42) is selected in such a way that the at least one tongue (56) of the one aperture element (40) is moved by means of the fluid pressure as fluid flows through the aperture element (40).

9. Solenoid valve (10) according to one of the preceding claims, **characterized in that** the throttle element (38) has an anti-twist means (48).

## Patentansprüche

1. Magnetventil (10), umfassend einen Anker (12), der zwischen einer offenen Position und einer geschlossenen Position verschiebbar ist und der dazu ausgelegt ist, eine Schließkraft auf ein Ventilelement (18) auszuüben, das in einem geschlossenen Zustand des Magnetventils (10) mit einem Ventilsitz (20) zusammenwirkt, sowie umfassend eine Dämpfungsvorrichtung (30), die dazu ausgelegt ist, eine Bewegung des Ankers (12) zu dämpfen, wobei die Dämpfungsvorrichtung (30) mindestens eine Dämpfungskammer (32) und ein Drosselelement (38) umfasst, wobei das Drosselelement (38) dazu ausgelegt ist, einen Widerstand zu erzeugen und somit die Bewegung des Ankers (12) zu dämpfen, wobei das Drosselelement (38) zwei plattenartige Öffnungselemente (40, 42) umfasst, die jeweils mindestens eine Durchströmöffnung (52, 54) haben und die der Dämpfungskammer (32) benachbart angeordnet sind, so dass Fluid, wenn es in die Dämpfungskammer (32) hineinströmt und wenn es aus der Dämpfungskammer (32) herausströmt, durch die Öffnungselemente (40, 42) strömt, **dadurch gekennzeichnet, dass** eines der Öffnungselemente (40, 42) mindestens eine beweglich montierte Zunge (56) umfasst, wobei die mindestens eine Durchströmöffnung (52, 54) des Öffnungselements (40, 42) in der beweglichen Zunge (56) angeordnet ist.

2. Magnetventil (10) nach Anspruch 1, **dadurch gekennzeichnet, dass** das Drosselelement (38) dazu ausgelegt ist, bei einer Bewegung des Ankers (12) in einer Richtung, insbesondere in der Richtung der geschlossenen Position, einen größeren Widerstand als bei einer Bewegung des Ankers (12) in der entgegengesetzten Richtung zu erzeugen.

3. Magnetventil (10) nach Anspruch 1 oder 2, **dadurch gekennzeichnet, dass** die mindestens eine Durchströmöffnung (54) eines Öffnungselements (42) größer als die mindestens eine Durchströmöffnung (52) des anderen Öffnungselements (40) ist, wobei die Durchströmöffnungen (52, 54) überlappend, insbesondere konzentrisch, angeordnet sind.

4. Magnetventil (10) nach einem der vorhergehenden Ansprüche, **dadurch gekennzeichnet, dass** die Öffnungselemente (40, 42) direkt aneinander anliegen.

5. Magnetventil (10) nach einem der vorhergehenden Ansprüche, **dadurch gekennzeichnet, dass** das Magnetventil eine Zwischenplatte (28) umfasst, die zwischen dem Anker (12) und dem Ventilsitz (20) angeordnet ist, wobei in der Zwischenplatte (28) mindestens eine Vertiefung (58) vorgesehen ist, in die sich mindestens eine Zunge (56) bewegen kann.

6. Magnetventil (10) nach Anspruch 5, **dadurch gekennzeichnet, dass** die Vertiefung (58), in Draufsicht gesehen, größer als die Zunge (56) des einen Öffnungselements (40, 42) ist.

7. Magnetventil (10) nach einem der vorhergehenden Ansprüche, **dadurch gekennzeichnet, dass** die Öffnungselemente (40, 42) als gestanzte Teile ausgebildet sind.

8. Magnetventil (10) nach einem der vorhergehenden Ansprüche, **dadurch gekennzeichnet, dass** die Dicke der Öffnungselemente (40, 42) so gewählt ist, dass die mindestens eine Zunge (56) des einen Öffnungselements (40) mittels des Fluiddrucks bewegt wird, wenn Fluid durch das Öffnungselement (40) strömt.

9. Magnetventil (10) nach einem der vorhergehenden Ansprüche, **dadurch gekennzeichnet, dass** das Drosselelement (38) eine Verdrehsicherung (48) hat.

## Revendications

1. Électrovanne (10) comprenant une armature (12) qui peut être déplacée entre une position ouverte et une position fermée et qui est conçue pour appliquer une force de fermeture sur un élément de vanne (18) qui, dans un état fermé de l'électrovanne (10), coopère avec un siège de vanne (20), et comprenant un dispositif d'amortissement (30) qui est conçu pour amortir un mouvement de l'armature (12), le dispositif d'amortissement (30) comprenant au moins une chambre d'amortissement (32) et un élément d'étranglement (38), l'élément d'étranglement (38) étant conçu pour produire une résistance et pour ainsi amortir le mouvement de l'armature (12), l'élément d'étranglement (38) comprenant deux éléments d'ouverture de type plaque (40, 42), chacun ayant au moins une ouverture de passage (52, 54), qui sont disposés de manière adjacente à la chambre d'amortissement (32) de telle sorte que du fluide, lorsqu'il s'écoule dans la chambre d'amortissement (32) et lorsqu'il s'écoule hors de la chambre d'amortissement (32), s'écoule à travers les éléments d'ouverture (40, 42), **caractérisée en ce qu'**un des éléments d'ouverture (40, 42) comprend au moins une languette montée de manière déplaçable (56), l'au moins une ouverture de passage (52, 54) de l'élément d'ouverture (40, 42) étant disposée à l'intérieur de la languette déplaçable (56).

2. Électrovanne (10) selon la revendication 1, **caractérisée en ce que** l'élément d'étranglement (38) est conçu pour produire une plus grande résistance dans le cas d'un mouvement de l'armature (12) dans une direction, en particulier dans la direction de la position fermée, que dans le cas d'un mouvement de l'armature (12) dans la direction opposée.

3. Électrovanne (10) selon la revendication 1 ou 2, **caractérisée en ce que** l'au moins une ouverture de passage (54) d'un élément d'ouverture (42) est plus grande que l'au moins une ouverture de passage (52) de l'autre élément d'ouverture (40), les ouvertures de passage (52, 54) étant disposées de façon chevauchante, en particulier concentriquement.

4. Électrovanne (10) selon l'une des revendications précédentes, **caractérisée en ce que** les éléments d'ouverture (40, 42) reposent directement l'un sur l'autre.

5. Électrovanne (10) selon l'une des revendications précédentes, **caractérisée en ce que** l'électrovanne comprend une plaque intermédiaire (28) qui est disposée entre l'armature (12) et le siège de vanne (20), au moins un renfoncement (58) étant prévu dans la plaque intermédiaire (28), renfoncement dans lequel au moins une languette (56) peut se déplacer.

6. Électrovanne (10) selon la revendication 5, **caractérisée en ce que** le renfoncement (58) est plus grand que la languette (56) dudit élément d'ouverture (40, 42) dans une vue en plan.

7. Électrovanne (10) selon l'une des revendications précédentes, **caractérisée en ce que** les éléments d'ouverture (40, 42) sont formés sous forme de pièces estampées.

8. Électrovanne (10) selon l'une des revendications précédentes, **caractérisée en ce que** l'épaisseur des éléments d'ouverture (40, 42) est choisie de telle sorte que l'au moins une languette (56) dudit élément d'ouverture (40) est déplacée au moyen de la pression de fluide à mesure que le fluide s'écoule à travers l'élément d'ouverture (40).

9. Électrovanne (10) selon l'une des revendications précédentes, **caractérisée en ce que** l'élément d'étranglement (38) a un moyen anti-torsion (48).
